(19) Europäisches Patentamt / European Patent Office / Office européen des brevets

(11) **EP 3 051 014 B1**

(12) **EUROPEAN PATENT SPECIFICATION**

(45) Date of publication and mention
of the grant of the patent:
**18.09.2019 Bulletin 2019/38**

(21) Application number: **14847466.1**

(22) Date of filing: **24.09.2014**

(51) Int Cl.:
*D04H 3/147* (2012.01)          *B01D 69/10* (2006.01)
*B01D 69/12* (2006.01)          *B01D 71/48* (2006.01)
*D04H 1/541* (2012.01)          *D04H 1/55* (2012.01)
*D04H 3/14* (2012.01)

(86) International application number:
**PCT/JP2014/075220**

(87) International publication number:
**WO 2015/046215 (02.04.2015 Gazette 2015/13)**

(54) **NON-WOVEN FABRIC, SEPARATION MEMBRANE SUPPORT, SEPARATION MEMBRANE, FLUID SEPARATION ELEMENT, AND METHOD FOR MANUFACTURING NON-WOVEN FABRIC**

VLIESSTOFF, TRENNMEMBRANTRÄGER, TRENNMEMBRAN, FLUIDTRENNUNGSELEMENT UND VERFAHREN ZUR HERSTELLUNG DES VLIESSTOFFS

NON-TISSÉ, SUPPORT DE MEMBRANE DE SÉPARATION, MEMBRANE DE SÉPARATION, ÉLÉMENT DE SÉPARATION DE LIQUIDE AINSI QUE PROCÉDÉ DE FABRICATION DE NON-TISSÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2013 JP 2013199848**

(43) Date of publication of application:
**03.08.2016 Bulletin 2016/31**

(73) Proprietor: **Toray Industries, Inc.**
**Tokyo 103-8666 (JP)**

(72) Inventors:
• **HANE, Ryoichi**
**Otsu-shi**
**Shiga 520-8558 (JP)**
• **NAKANO, Yohei**
**Otsu-shi**
**Shiga 520-8558 (JP)**
• **YAKAKE, Yoshikazu**
**Otsu-shi**
**Shiga 520-8558 (JP)**

(74) Representative: **Prüfer & Partner mbB**
**Patentanwälte · Rechtsanwälte**
**Sohnckestraße 12**
**81479 München (DE)**

(56) References cited:
WO-A1-2013/125583          JP-A- S61 222 506
JP-A- 2009 233 666          JP-A- 2011 212 602
JP-A- 2012 040 546          JP-A- 2012 045 509
JP-A- 2012 161 725          JP-A- 2013 071 106
JP-A- 2013 071 106          JP-A- 2013 154 341

**Description**

TECHNICAL FIELD

The present invention relates to a nonwoven fabric having a small warp under a condition of a high temperature while it has two asymmetric surfaces, and having an excellent dimensional stability, and particularly relates to a nonwoven fabric which can be suitably used for a support of a separation membrane such as a reverse osmosis membrane. In addition, the present invention relates to a separation membrane support using the nonwoven fabric, a separation membrane using the separation membrane support, a fluid separation element using the separation membrane, and a method for manufacturing the nonwoven fabric.

BACKGROUND ART

In water treatment in recent years, membrane techniques have been used in many cases. For example, microfiltration membranes or ultrafiltration membranes are used in the water treatment performed in a purification plant and reverse osmosis membranes are used for seawater desalination. In addition, reverse osmosis membranes or nanofiltration membranes are used in treatment of semiconductor manufacturing water, boiler water, medical water, and laboratory pure water. Further, a membrane bioreactor using microfiltration membranes or ultrafiltration membranes is also used in treatment of wastewater.

These separation membranes are widely divided into flat membranes and hollow fiber membranes depending on the shape thereof. Among these separation membranes, flat membranes formed mainly of a synthetic polymer have poor mechanical strength as a single membrane having a separation function, and accordingly, the membranes are generally used integrally with a separation membrane support such as a nonwoven fabric or a woven fabric, in many cases.

In general, a membrane having a separation function and a separation membrane support are integrally formed by a method of flow-casting and fixing a solution of polymer which is a raw material of a membrane having a separation function, onto a separation membrane support such as a nonwoven fabric or a woven fabric. In addition, in a case of a semipermeable membrane such as a reverse osmosis membrane, the membranes are integrally formed by a method of forming a support layer by flow-casting a polymer solution onto a separation membrane support such as a nonwoven fabric or a woven fabric, and then forming a semipermeable membrane on the support layer.

Therefore, the nonwoven fabric used as the separation membrane support is required to have excellent membrane-forming properties, so as to prevent permeation of a polymer solution to the backside of the fabric because of overpermeation of the solution when the solution is flow-cast onto the fabric, to inhibit a membrane material from peeling off, and further to inhibit the membrane formed thereon from becoming non-uniform owing to the fluffiness of the nonwoven fabric and inhibit defects such as pinholes from generating. In addition, in order to stably manufacture a separation membrane with a high yield, the nonwoven fabric used as a support in a separation membrane manufacturing step is also required to have high dimensional stability, so as to prevent permeation of a polymer solution to the backside of the fabric because of overpermeation of the solution when the solution is flow-cast onto the fabric, and to prevent deformation due to heat or tension applied to the nonwoven fabric.

Further, as a configuration of the fluid separation elements for making the handling of a separation membrane easy, plate frame type, pleated type, and spiral type fluid separation elements of a flat membrane are used. For example, in a case of a plate frame type fluid separation element, a step of attaching a separation membrane cut into a predetermined size to a frame is necessary, and in a case of a spiral type fluid separation element, a step of bonding outer peripheral portions of separation membranes cut into a predetermined size to each other to make an envelope shape and winding the membrane around a water collection tube is necessary. Accordingly, the nonwoven fabric used as the separation membrane support is required to have excellent workability so as to prevent bending or rolling of the membrane during these steps.

In addition, in a case of a semipermeable membrane such as a reverse osmosis membrane which is used under high pressure in many cases, the nonwoven fabric used as a support is particularly required to have high mechanical strength.

Conventionally, a separation membrane support formed of a nonwoven fabric having a multilayered structure, in which a double structure of a front surface layer having a large aperture and surface roughness and using a thick fiber and a back surface layer having a fine structure with a small aperture and using a thin fiber is basically formed, has been proposed as the separation membrane support formed of the nonwoven fabric described above (see Patent Document 1).

In addition, a semipermeable membrane support which has a tensile strength ratio in a paper-making flow direction and a width direction of from 2:1 to 1:1, and which is a nonwoven fabric formed of: a main fiber formed of a synthetic resin fine fiber; and a binder fiber, and manufactured by heating and pressurizing after paper-making, has been proposed (see Patent Document 2). Further, a separation membrane support formed of a nonwoven fabric in which fibers disposed on a separation-membrane-forming surface side of the nonwoven fabric are laterally oriented rather than fibers disposed on a non-separation-membrane-forming surface side of the nonwoven fabric, has been proposed as the separation membrane support formed of the nonwoven fabric (see Patent Document 3).

WO2013125583 (A1) discloses a separation membrane support comprising a nonwoven fabric and having excellent membrane formability that achieves a high and stable yield when the separation membrane support supports various separation membranes such as microfiltration membranes, ultrafiltration membranes, nanofiltration membranes, and reverse osmosis membranes, having excellent processability when a fluid separation element is produced, and having excellent mechanical strength. Also provided are a separation membrane and a fluid separation element using the separation membrane support and having high membrane peel strength. The separation membrane support comprises a nonwoven fabric. The nonwoven fabric has a boiling water shrinkage of -0.2 to 2.0% in the length direction (longitudinal direction) after treatment in boiling water for 5 minutes. The separation membrane is prepared by forming a membrane having a separation function on a surface of the separation membrane support. The fluid separation element comprises the separation membrane as a constituent.

JP2013071106 (A) teaches a separation membrane-supporting body which is excellent in forming membranes when a separation membrane, such as a precise filtration membrane, an ultrafiltration membrane, a nanofiltration membrane and a reverse osmosis membrane is supported, and has excellent processability when a fluid-separating element is manufactured, the supporting body comprising unwoven fabric which is excellent in mechanical strength; to provide a separation membrane using the separation membrane-supporting body, the membrane being high in membrane exfoliation strength; and to provide a fluid-separating element. The separation membrane-supporting body comprises unwoven fabric which is not hydrophilic. Its water absorption time is at least 15 seconds according to the 7.1.1 drop method of JISL1907 (2010 version), and the Bekk smoothness of the back face of the unwoven fabric is 5-35 seconds according to JISP8119 (1998 version).

JP2012045509 (A) discloses a method of manufacturing a separation membrane support, made of a nonwoven fabric which has a superior film-forming property provided when supporting the separation membrane, has a superior processing property provided when manufacturing fluid separation element and, additionally, has an excellent mechanical strength, and to provide a separation membrane and a fluid separation element using the separation membrane support. The method of manufacturing separation membrane support includes a process of subjecting the nonwoven fabric to thermocompression by the use of at least two flat rollers, wherein the flat rollers consist of a combination of metallic rollers and elastic rollers, the elastic roller has a hardness (Shore D) of 70 to 99 and the nonwoven fabrics stacked in 2 to 5 layers are preferably subjected to thermocompression to be integrated.

In these documents, membrane-forming properties at the time of manufacturing a separation membrane, workability at the time of coagulating or passing through a washing tank after forming a membrane, and workability at the time of manufacturing a fluid separation element have been proposed or disclosed, and a technique of preventing deformation of a support when a separation membrane or the like is coagulated and shrinks on a separation membrane support has been also described therein.

BACKGROUND ART DOCUMENT

PATENT DOCUMENT

Patent Document 1: JP-B-4-21526
Patent Document 2: JP-A-2002-95937
Patent Document 3: JP-A-2011-161344

SUMMARY OF THE INVENTION

PROBLEMS THAT THE INVENTION IS TO SOLVE

However, in the techniques of the related art, there is no specific proposal or disclosure for stably manufacturing a separation membrane or a fluid separation element with a high yield, with respect to heat applied to the nonwoven fabric which is a separation membrane support in the manufacturing step.

Therefore, an object of the present invention is to provide a nonwoven fabric having excellent mechanical strength, in addition to workability stabled with a high yield even with respect to heat applied when forming a membrane and manufacturing a fluid separation element, when the nonwoven fabric is used as a support for a separation membrane such as a reverse osmosis membrane.

Another object of the present invention is to provide a separation membrane support using the nonwoven fabric described above, and a separation membrane and a fluid separation element using the same.

MEANS FOR SOLVING THE PROBLEMS

The present invention solves the above-mentioned problem, and a nonwoven fabric according to the independent claim. Further preferred embodiments are defined according to the dependent claims.

According to the present invention, the nonwoven fabric includes conjugate fibers including a high-melting-point polymer and a low-melting-point polymer which is disposed around the high-melting-point polymer and has a melting point lower than a melting point of the high-melting-point polymer,

a difference between the melting point of the high-melting-point polymer and the melting point of the low-melting-point polymer is from 10°C to 140°C, and

the conjugate fibers contain 50 mass% to 90 mass% of the high-melting-point polymer.

According to the present invention, the nonwoven fabric is a spun-bonded nonwoven fabric.

A separation membrane support of the present invention is a separation membrane support including the above-mentioned nonwoven fabric.

A separation membrane of the present invention is a separation membrane obtained by forming a membrane having a separation function on a surface of the above-mentioned separation membrane support.

A fluid separation element of the present invention is a fluid separation element including the above-mentioned separation membrane as a constituent element.

A method for manufacturing a nonwoven fabric of the present invention is a method for manufacturing the above-mentioned nonwoven fabric, the method including:

performing thermocompression bonding of a nonwoven fabric sheet including polyester fibers having a movable amorphous content of 40% to 70% with a pair of flat rolls.

According to a preferable embodiment of the method for manufacturing the nonwoven fabric of the present invention, the nonwoven fabric sheet is a nonwoven fabric sheet which is subjected to preliminary thermocompression bonding with flat rolls and has a filling density of 0.1 to 0.3,

a temperature of the flat rolls used in the preliminary thermocompression bonding is lower than a melting point of fibers constituting the nonwoven fabric sheet, and

a difference between the temperature of the flat rolls in the preliminary thermocompression bonding and the melting point of the fibers constituting the nonwoven fabric sheet is from 30°C to 130°C.

ADVANTAGE OF THE INVENTION

According to the present invention, a nonwoven fabric having: excellent membrane-forming properties when the nonwoven fabric is used as a support for a separation membrane such as a reverse osmosis membrane, so as to prevent permeation of a polymer solution to the backside of the fabric because of overpermeation of the solution when the solution is flow-cast onto the fabric, to inhibit a membrane material from peeling off, to inhibit defects such as pinholes from generating, and to prevent bending or rolling of the membrane; excellent workability so as to prevent bending or rolling of the membrane when manufacturing a fluid separation element; and excellent mechanical strength so as to prevent deformation or fracture due to pressure applied when the nonwoven fabric is used in the separation membrane or the fluid separation element, can be obtained.

As described above, the nonwoven fabric of the present invention can be suitably used as a support for a separation membrane such as a reverse osmosis membrane.

MODE FOR CARRYING OUT THE INVENTION

A nonwoven fabric of the present invention is defined by independent claim 1. Preferably embodiments are defined by the dependent claims.

Examples of a polymer of a fiber constituting the nonwoven fabric of the present invention include a polyester polymer, a polyamide polymer, a polyolefin polymer, and a mixture or a copolymer thereof. Among these, a polyester polymer is preferably used, because it is possible to obtain a separation membrane support having more excellent mechanical strength and durability such as heat resistance, water resistance and chemical resistance.

The polyester polymer is polyester formed of an acid component and an alcohol component. Examples of the acid component include aromatic carboxylic acids such as terephthalic acid, isophthalic acid and phthalic acid, aliphatic dicarboxylic acids such as adipic acid and sebacic acid, and alicyclic dicarboxylic acids such as cyclohexanecarboxylic acid. In addition, examples of the alcohol component include ethylene glycol, diethylene glycol and polyethylene glycol.

Examples of the polyester polymer include polyethylene terephthalate, polybutylene terephthalate, polytrimethylene terephthalate, polyethylene naphthalate, polylactic acid, polybutylene succinate, and a copolymer thereof, and among these, polyethylene terephthalate is preferably used.

In addition, a biodegradable polymer (resin) can also be used as a polymer of a fiber constituting the nonwoven fabric, because it is easily discarded after being used and causes small environmental loads. Examples of the biodegradable polymer include polylactic acid, polybutylene succinate, polycaprolactone, polyethylene succinate, polyglycolic acid and polyhydroxybutyrate. Among the biodegradable polymers, polylactic acid is preferably used, because it is a resin derived from plants which do not cause depletion of oil resources, and is a biodegradable resin having comparatively high mechanical characteristics and heat resistance and causing low manufacturing costs. Examples of polylactic acid which is particularly preferably used include poly(D-lactic acid), poly(L-lactic acid), a copolymer of D-lactic acid and L-lactic acid, and a blend thereof.

The fiber constituting the nonwoven fabric of the present invention may be a fiber formed of a single component, a conjugate fiber formed of a plurality of components, or a so-called mixed fiber obtained by mixing different kinds of fibers, but in the nonwoven fabric of the present invention, a conjugate fiber including a high-melting-point polymer and a low-melting-point polymer which is disposed around the high-melting-point polymer and has a melting point lower than a melting point of the high-melting-point polymer, is particularly preferably used.

By using such a conjugate fiber, the fibers of the nonwoven fabric are strongly bonded to each other by thermocompression bonding at the time of manufacturing the nonwoven fabric, and accordingly, it is possible to set the boiling water curling height to be equal to or smaller than 8.0 mm, even when a difference in smoothness between two surfaces of the nonwoven fabric is increased, and it is possible to prevent deformation such as bending or rolling of the nonwoven fabric, even in a case where heat is received when using the nonwoven fabric. In addition, it is possible to prevent non-uniformity owing to the fluffiness of the nonwoven fabric at the time of flow-casting of a polymer solution and prevent membrane defects, when the nonwoven fabric is used as the separation membrane support. Further, since the conjugate fiber has a great number of bonding points, as compared to a mixed fiber obtained by mixing a fiber consisting of a high-melting-point polymer and a fiber consisting of a low-melting-point polymer, the mechanical strength thereof is improved.

A difference in a melting point between the high-melting-point polymer and the low-melting-point polymer constituting the conjugate fiber described above is from 10°C to 140°C. The difference in a melting point is preferably equal to or higher than 10°C, more preferably equal to or higher than 20°C and even preferably equal to or higher than 30°C, and therefore, it is possible to obtain a heat bonding property contributing to the improvement of the mechanical strength, without deteriorating the strength of the high-melting-point polymer disposed in a center portion. In addition, it is possible to prevent deformation due to the heat applied when using the nonwoven fabric. Meanwhile, the difference in a melting point is preferably equal to or lower than 140°C, more preferably equal to or lower than 120°C, and even more preferably equal to or lower than 100°C, and therefore, it is possible to prevent a decrease in productivity due to fusion of the low-melting-point polymer component to a heat roll at the time of performing thermocompression bonding using the heat roll.

The melting point of the high-melting-point polymer is preferably from 160°C to 320°C, because membrane-forming properties when forming the separation membrane on the separation membrane support are excellent and a separation membrane having excellent durability can be obtained, when the nonwoven fabric of the present invention is used as the separation membrane support. The melting point of the high-melting-point polymer is preferably equal to or higher than 160°C, more preferably equal to or higher than 170°C, and even more preferably equal to or higher than 180°C, and therefore, excellent dimensional stability is obtained, even when a step of applying heat at the time of manufacturing the separation membrane or the fluid separation element has passed. Meanwhile, the melting point of the high-melting-point polymer is preferably equal to or lower than 320°C, more preferably equal to or lower than 300°C, and even more preferably equal to or lower than 280°C, and therefore, it is possible to prevent a decrease in productivity due to a large consumption of thermal energy for the fusion at the time of manufacturing the nonwoven fabric.

In addition, the melting point of the low-melting-point polymer is preferably from 120°C to 250°C, more preferably from 140°C to 240°C, and even more preferably from 230°C to 240°C.

50 mass% to 90 mass% of a high-melting-point polymer is contained in the conjugate fiber in which a low-melting-point polymer having a melting point lower than a melting point of the high-melting-point polymer is disposed around the high-melting-point polymer. The content of the high-melting-point polymer contained in the conjugate fiber is equal to or greater than 50 mass%, more preferably equal to or greater than 70 mass%, and even more preferably equal to or greater than 75 mass%, and therefore, it is possible to prevent deformation due to heat applied when using the nonwoven fabric. Meanwhile, the content of the high-melting-point polymer contained in the conjugate fiber is preferably equal to or less than 90 mass%, more preferably equal to or less than 85 mass%, and even more preferably equal to or less than 80 mass%, and therefore, it is possible to obtain a heat bonding property contributing to the improvement of the mechanical strength of the nonwoven fabric, it is possible to set the boiling water curling height to be equal to or smaller than 8.0 mm, even when a difference in smoothness between two surfaces of the nonwoven fabric is increased, and it is possible to prevent deformation such as bending or rolling of the nonwoven fabric, even in a case where heat is received when using the nonwoven fabric.

In addition, examples of a combination of the high-melting-point polymer and the low-melting-point polymer (high-melting-point polymer/low-melting-point polymer) include combinations such as polyethylene terephthalate/polybutylene terephthalate, polyethylene terephthalate/polytrimethylene terephthalate, polyethylene terephthalate/polylactic acid, and polyethylene terephthalate/copolymerized polyethylene terephthalate. In addition, herein, isophthalic acid or the like is preferably used as a copolymerization component of the copolymerized polyethylene terephthalate, and among these, a combination of polyethylene terephthalate/isophthalate copolymerized polyethylene terephthalate is particularly preferably used.

Additives such as a nucleating agent, a matting agent, a lubricant, a pigment, an antifungal agent, an antibacterial agent and a flame retardant can be added to the fiber constituting the nonwoven fabric, within a range not impairing the effects of the present invention. Among these, a metal oxide such as titanium oxide exhibits effects of improving spinnability by decreasing the surface friction of the fibers and preventing fusion between the fibers, and improving bonding properties of the nonwoven fabric by increasing thermal conductivity, when molding the nonwoven fabric by thermocompression bonding using a heat roll. Aliphatic bisamide and/or alkylsubstituted aliphatic monoamide such as ethylene bis stearic acid amide exhibits an effect of improving the bonding stability by increasing releasability between the heat roll and a web.

As a conjugate form of the conjugate fiber, for example, a conjugate form such as a concentric core-sheath type, an eccentric core-sheath type, and a sea-island type can be used from a viewpoint of efficiently obtaining heat bonding point between fibers.

In addition, as a cross-sectional shape of the fiber constituting the nonwoven fabric, a circular cross section, a flat cross section, a polygonal cross section, a multifoil cross-section, and a hollow cross section may be mentioned.

Among these, it is preferable to use a concentric core-sheath type as the conjugate form and a circular cross section or a flat cross section as the cross-sectional shape of the fiber. By using such a conjugate form, it is possible to strongly bond the fibers to each other by thermocompression bonding, to decrease a thickness of the nonwoven fabric, and to increase the area of the separation membrane per unit of the fluid separation element, in a case where the fabric is used as the separation membrane support.

An average single fiber diameter of the fiber constituting the nonwoven fabric is preferably from 3 $\mu$m to 30 $\mu$m. The average single fiber diameter of the fiber is preferably equal to or greater than 3 $\mu$m, and more preferably equal to or greater than 5 $\mu$m, and even more preferably equal to or greater than 7 $\mu$m, and therefore, a decrease in the spinnability at the time of manufacturing the nonwoven fabric is small, a void in the support when the nonwoven fabric is used as the separation membrane support can be maintained, so that the polymer solution subjected to flow-casting when forming the membrane, rapidly permeates the inside of the separation membrane support, and excellent membrane-forming properties can be obtained. Meanwhile, the average single fiber diameter of the fiber is preferably equal to or smaller than 30 $\mu$m, more preferably equal to or smaller than 25 $\mu$m, and even more preferably equal to or smaller than 20 $\mu$m, and therefore, smoothness of at least one surface of the nonwoven fabric is equal to or greater than 10 seconds, and it is possible to obtain a nonwoven fabric having excellent uniformity. In addition, it is possible to strongly integrally form the nonwoven fabric by heat bonding, it is possible to set the boiling water curling height to be equal to or smaller than 8.0 mm, even when a difference in smoothness between two surfaces of the nonwoven fabric is increased, and it is possible to prevent deformation such as bending or rolling of the nonwoven fabric, even in a case where heat is received when using the nonwoven fabric.

As the nonwoven fabric of the present invention, it is preferable to use a spun-bonded nonwoven fabric which is manufactured by a spun-bonding method. When the spun-bonded nonwoven fabric which is a long-fiber nonwoven fabric including thermoplastic filaments is used as the separation membrane support, it is possible to inhibit non-uniformity owing to the fluffiness at the time of flow-casting of a polymer solution and membrane defects, which easily occurs when a short-fiber nonwoven fabric is used. In addition, the spun-bonded nonwoven fabric is preferably used, because it is possible to obtain a separation membrane having excellent durability when the spun-bonded nonwoven fabric is used as a separation membrane support since the spun-bonded nonwoven fabric has more excellent mechanical strength.

Further, the nonwoven fabric of the present invention can be set as a laminated nonwoven fabric formed of a plurality of layers. By using the laminated nonwoven fabric, it is possible to obtain a nonwoven fabric having more excellent uniformity and it is possible to easily adjust the density distribution of the nonwoven fabric in a thickness direction and the smoothness of two surfaces of the nonwoven fabric.

As a form of a laminate of the nonwoven fabric, for example, a laminate of two-layered spun-bonded nonwoven fabric, a laminate having a three-layer structure in which a melt-blown nonwoven fabric is disposed between two layers of the spun-bonded nonwoven fabrics, or the like may be mentioned. Among these, it is preferable that at least one layer is a spun-bonded nonwoven fabric and it is more preferable that layers of the laminate are formed of only a spun-bonded nonwoven fabric, in view of excellent mechanical strength.

A mass per area of the nonwoven fabric of the present invention is preferably from 20 g/m$^2$ to 150 g/m$^2$. The mass per area thereof is preferably equal to or greater than 20 g/m$^2$, more preferably equal to or greater than 30 g/m$^2$, and even more preferably equal to or greater than 40 g/m$^2$, and therefore, it is possible to obtain excellent membrane-forming properties with less overpermeation at the time of flow-casting of a polymer solution, when the nonwoven fabric is used as the separation membrane support, and it is possible to obtain a separation membrane having excellent dimensional stability, high membrane peeling strength and mechanical strength, and excellent durability. Meanwhile, the mass per area thereof is preferably equal to or smaller than 150 g/m$^2$, more preferably equal to or smaller than 120 g/m$^2$, and even more preferably equal to or smaller than 90 g/m$^2$, and therefore, it is possible to decrease the thickness of the separation membrane and increase the area of the separation membrane per unit of the fluid separation element, when the nonwoven fabric is used as the separation membrane support.

The thickness of the nonwoven fabric of the present invention is preferably from 0.03 mm to 0.20 mm. The thickness of the nonwoven fabric is preferably equal to or greater than 0.03 mm, more preferably equal to or greater than 0.04 mm, and even more preferably equal to or greater than 0.05 mm, and therefore, it is possible to obtain excellent membrane-forming properties with less overpermeation at the time of flow-casting of a polymer solution, when the nonwoven fabric is used as the separation membrane support, a dimensional change in the separation membrane manufacturing step is small due to a high dimensional stability, it is possible to prevent curling or bending after forming the membrane and to obtain excellent workability at the time of manufacturing the fluid separation element, and it is possible to obtain a separation membrane having high mechanical strength and excellent durability. Meanwhile, the thickness of the nonwoven fabric is preferably equal to or smaller than 0.20 mm, more preferably equal to or smaller than 0.16 mm, and even more preferably equal to or smaller than 0.12 mm, and therefore, it is possible to decrease the thickness of the separation membrane and increase the area of the separation membrane per unit of the fluid separation element, when the nonwoven fabric is used as the separation membrane support.

In the nonwoven fabric of the present invention, it is important that a difference in smoothness of two surfaces thereof, which is measured based on JIS P8119 (1998), is from 10 seconds to 50 seconds. When using the nonwoven fabric as the separation membrane support (hereinafter, may be referred to as a support), it is preferable that a surface having a larger numerical value of the smoothness, that is, more smooth surface is set as a membrane-forming surface (front surface). When manufacturing the separation membrane, a membrane forming method of flow-casting a polymer solution onto a front surface of a support, coagulating the polymer solution by permeating a coagulating solution containing water as a main component thereof from a back surface of the support, and performing integral formation with the support is widely used. At that time, by setting the difference in smoothness between two surfaces to be equal to or greater than 10 seconds, it is possible to rapidly permeate the coagulating solution from the back surface of the support and to perform coagulating before the polymer solution subjected to the flow-casting onto the front surface of the support reaches the back surface of the support. Meanwhile, by setting the difference in smoothness between two surfaces to be equal to or smaller than 50 seconds, it is possible to sufficiently permeate the polymer solution into the inside from the front surface of the support, before the coagulating solution permeated from the back surface of the support reaches the front surface of the support, thereby being able to improve the membrane peeling strength of the formed separation membrane. The difference in smoothness between two surfaces of the nonwoven fabric is preferably equal to or greater than 15 seconds and more preferably equal to or greater than 20 seconds. In addition, the difference thereof is preferably equal to or smaller than 40 seconds and more preferably equal to or smaller than 30 seconds.

The smoothness of the nonwoven fabric of the present invention is preferably from 5 seconds to 80 seconds, more preferably equal to or greater than 10 seconds, and even more preferably equal to or greater than 15 seconds. In addition, the smoothness thereof is more preferably equal to or smaller than 70 seconds and even more preferably equal to or smaller than 60 seconds. The smoothness of the nonwoven fabric is preferably set to be equal to or greater than 5 seconds, and therefore, it is possible to obtain excellent membrane-forming properties by preventing excessive permeation of a polymer solution subjected to flow-casting onto a support or a coagulating solution, into the support, when the nonwoven fabric is used as the separation membrane support. Meanwhile, the smoothness of the nonwoven fabric is preferably set to be equal to or smaller than 80 seconds, and therefore, it is possible to prevent insufficient permeation of a polymer solution or a coagulating solution, into the support, occurring due to excessive smoothening of the front surface of the support or the back surface of the support, when the nonwoven fabric is used as the separation membrane support.

In addition, in the nonwoven fabric of the present invention, it is important that the boiling water curling height after treating in boiling water for 5 minutes is from 0 mm to 8.0 mm. When the nonwoven fabric is used as the separation membrane support, heat is applied to the fabric in many cases due to warm water washing or drying performed in the steps at the time of manufacturing the separation membrane or drying or the like in the step of manufacturing the fluid separation element. Accordingly, the boiling water curling height of the nonwoven fabric is equal to or smaller than 8.0 mm, preferably equal to or smaller than 6.0 mm, and more preferably equal to or smaller than 4.0 mm, and therefore, it is possible to obtain excellent membrane-forming properties and workability with excellent dimensional stability, without bending or rolling of the membrane when the heat is applied.

The boiling water curling height disclosed in the present invention is acquired by extracting three samples having a size of 25 cm square from arbitrary portions of the nonwoven fabric, dipping the samples in boiling water for 5 minutes and then taking out the samples therefrom, drying the samples naturally on a flat base by disposing the samples so that the surface thereof having larger smoothness faces upward, measuring a height (distance from the base) of the center portion of both sides of the three samples in a unit of 0.5 mm, and averaging the values.

Next, an example of a method for manufacturing a nonwoven fabric particularly suitably used as the separation membrane support of the present invention will be described.

In the present invention, in a case of using a conjugated fiber such as a core-sheath type as the fiber constituting the nonwoven fabric, a typical conjugating method can be used in the manufacturing of the conjugated fiber.

In a case of using the spun-bonding method as the method for manufacturing a nonwoven fabric, it is possible to manufacture a long-fiber nonwoven fabric by extruding a fused thermoplastic polymer from nozzles, sucking and stretching this by high-speed suction gas to perform fiber spinning, collecting the fibers on a moving conveyer to obtain a fiber web, and continuously performing thermocompression bonding or the like for integration. At that time, a fiber spinning rate is preferably equal to or greater than 3000 m/min, more preferably equal to or greater than 3500 m/min, and even more preferably equal to or greater than 4000 m/min, so that the fibers constituting the fiber web are highly oriented and crystallized, from viewpoints that it is possible to obtain excellent workability without generating wrinkles due to excessive shrinkage of the fibers at the time of the thermocompression bonding and the strength of the fiber contributing to the mechanical strength of the nonwoven fabric is also improved.

In addition, by preventing excessive orientation and crystallization of the fibers, it is possible to obtain heat bonding properties contributing to the improvement of the mechanical strength of the nonwoven fabric and it is possible to prevent deformation such as bending or rolling of the nonwoven fabric, even when the difference in smoothness between the two surfaces of the nonwoven fabric is large or even in a case where heat is received when using the nonwoven fabric, and therefore, the fiber spinning rate is preferably equal to or less than 5500 m/min, more preferably equal to or less than 5000 m/min, and even more preferably equal to or less than 4500 m/min.

Further, in a case of using the spun-bonding method as the method for manufacturing a nonwoven fabric, a temperature of the fiber before performing sucking and stretching by high-speed suction gas is preferably from 40°C to 80°C and more preferably from 50°C to 70°C. The temperature of the fiber before performing sucking and stretching by high-speed suction gas is equal to or higher than 40°C, whereby it is possible to prevent cutting at the time of the fiber spinning. In addition, the temperature of the fiber before performing sucking and stretching by high-speed suction gas is equal to or lower than 80°C, whereby it is possible to sufficiently increase a movable amorphous content of polyester fibers constituting a sheet before performing the thermocompression bonding which will be described later.

In a case of using the melt-blowing method as the method for manufacturing a nonwoven fabric, it is possible to manufacture a long-fiber nonwoven fabric by blowing a heated high speed gas fluid to the fused thermoplastic polymer to stretch the thermoplastic polymer thereby producing ultrafine fiber, followed by collecting.

In addition, in a case of the short-fiber nonwoven fabric, a method of cutting the long fiber to obtain a short fiber and manufacturing a nonwoven fabric by a dry method or a wet method, is preferably used.

In a case of using a method of manufacturing a laminate formed of two layers of the nonwoven fabric, for example, as a method for manufacturing a laminate of the nonwoven fabric described above (laminated nonwoven fabric), a method of stacking two layers of the nonwoven fabric in a semi-bonded state obtained with a pair of rolls and performing integration by the thermocompression bonding can be preferably used. In addition, as a method for manufacturing a laminate having a three-layer structure in which a melt-blown nonwoven fabric is disposed between two layers of the spun-bonded nonwoven fabrics, a method of stacking the nonwoven fabrics so that a melt-blown nonwoven fabric manufactured in another line is interposed between the two layers of the spun-bonded nonwoven fabrics in a semi-bonded state obtained with a pair of rolls, and performing integration by the thermocompression bonding, or a method of collecting, laminating, and performing thermocompression bonding with respect to a web which is converted into a fiber state by being extruded respectively from a spun-bonding nozzle, a melt-blowing nozzle and a spun-bonding nozzle which are disposed on an upper portion of a series of a collecting conveyer, can be preferably used.

In a case of a dry short-fiber nonwoven fabric or a paper-making nonwoven fabric, a method of stacking a plurality of layers of nonwoven fabrics which are temporarily wound, and integrally forming the fabric by the thermocompression bonding, can be preferably used.

Herein, as a method of performing the thermocompression bonding for integrally forming the nonwoven fabric, a method of performing integral forming by performing the thermocompression bonding uniformly with respect to the entire surface of the nonwoven fabric by a pair of upper and lower flat rolls can be preferably used, in order to set the smoothness of at least one surface of the nonwoven fabric to be equal to or greater than 10 seconds. The flat rolls are metal rolls or elastic rolls having no unevenness in the surface of the rolls and can be used as a pair of a metal roll and a metal roll or a pair of a metal roll and an elastic roll. In particular, when a temperature difference provided between a pair of upper and lower flat rolls, it is possible to obtain a nonwoven fabric in which a difference in smoothness of two surfaces is from 10 seconds to 50 seconds, and it is possible to reduce a dimensional change during the separation membrane manufacturing step when the nonwoven fabric is used as the separation membrane support, by preventing fusion of the fibers of the surface of the nonwoven fabric to maintain the shape. Therefore, a method of performing the thermocompression bonding with respect to the nonwoven fabric with a metal roll and an elastic roll having a surface temperature lower than that of the metal roll is preferably used.

The elastic roll herein is a roll formed of a material having elasticity as compared to the metal roll. As the elastic roll, a so-called paper roll such as paper, cotton and Aramid Paper, a resin-made roll formed of a urethane resin, an epoxy resin, a silicone resin, a polyester resin, hard rubber or a mixture thereof, or the like are used.

Hardness (Shore D) of the elastic roll is preferably from 70 to 91. The hardness (Shore D) of the elastic roll is preferably equal to or greater than 70, more preferably equal to or greater than 73, and even more preferably equal to or greater than 76, and therefore, it is possible to set the smoothness of the surface of the nonwoven fabric coming into contact with the elastic roll to be equal to or greater than 10 seconds. Meanwhile, the hardness (Shore D) of the elastic roll is preferably equal to or smaller than 91, more preferably equal to or smaller than 86, and even more preferably equal to or smaller than 81, and therefore, it is possible to prevent excessive improvement of the smoothness of the surface of the nonwoven fabric coming into contact with the elastic roll and to obtain a nonwoven fabric in which a difference in smoothness of the two surfaces thereof is from 10 seconds to 50 seconds.

In addition, as a configuration of the two or more flat rolls, a combination such as a two-roll × 2 set system or two-roll × 3 set system using two or more sets of a combination of metal/elastic rolls continuously or discontinuously during the manufacturing step, or a three-roll system such as an elastic/metal/elastic system, an elastic/metal/metal system, and a metal/elastic/metal system can be preferably used.

In a case of a combination of the two-roll × 2 set system, it is possible to apply heat and pressure twice with respect to the nonwoven fabric, and accordingly, it is easy to control characteristics of the nonwoven fabric and it is possible to increase the speed of processes in the manufacturing. In addition, contact surfaces of the elastic rolls in the first set and the second set are easily reversed, and accordingly, it is also easy to control the surface characteristics of the two surfaces of the nonwoven fabric.

Meanwhile, in a case of a combination of the three-roll system, a nonwoven fabric obtained by performing the thermocompression bonding between an elastic roll 1 and a metal roll of a combination of an elastic roll 1/a metal roll/elastic roll 2 is reflexed and the thermocompression bonding is further performed between the metal roll and the elastic roll 2, and accordingly, it is possible to apply heat and pressure twice with respect to the nonwoven fabric in the same manner as in the two-roll × 2 set system, and it is possible to reduce the cost of equipment and save space, as compared to the continuous two-roll × 2 set system.

In the manufacturing method using two or more elastic rolls, the hardness (Shore D) of the elastic roll coming into contact with the nonwoven fabric during the first stage and the hardness of the elastic roll coming into contact with the nonwoven fabric during the second stage may be changed.

A surface temperature of the metal roll used in the thermocompression bonding is preferably lower than a melting point of the polymer constituting at least the surface of the fibers constituting the nonwoven fabric, and a difference in the surface temperature of the metal roll and the melting point of the polymer constituting at least the surface of the fibers constituting the nonwoven fabric is more preferably from 20°C to 80°C. When a difference in the surface temperature of the metal roll and the melting point of the polymer constituting at least the surface of the fibers constituting the nonwoven fabric is equal to or higher than 20°C, it is possible to prevent excessive fusion of the fibers of the surface of the nonwoven fabric, permeation of the polymer solution is easily performed when the nonwoven fabric is used as the separation membrane support, and it is possible to obtain a separation membrane support having excellent membrane peeling strength.

Meanwhile, a difference in the surface temperature of the metal roll and the melting point of the polymer constituting at least the surface of the fibers constituting the nonwoven fabric is preferably equal to or lower than 80°C and more preferably equal to or lower than 40°C, and therefore, it is possible to strongly bond the fibers constituting the nonwoven fabric to each other and set the boiling water curling height of the nonwoven fabric to be equal to or smaller than 8.0 mm. In addition, it is possible to set the smoothness of the surface of the nonwoven fabric coming into contact with the metal roll to be equal to or greater than 20 seconds and to obtain a nonwoven fabric having excellent mechanical strength by realizing high density.

As described above, a method of performing the thermocompression bonding of the nonwoven fabric by a heated metal roll and an elastic roll having a surface temperature lower than that of the metal roll is preferably used. A difference between the surface temperature of the metal roll and the surface temperature of the elastic roll is more preferably set to be from 10°C to 120°C. The difference between the surface temperature of the metal roll and the surface temperature of the elastic roll is more preferably from 20°C to 100°C and even more preferably from 30°C to 80°C.

An induction heat generation method or a heating medium circulation method can be preferably used as a heating method of the metal roll, and a temperature difference of the metal roll in a width direction of the nonwoven fabric with respect to the central value is preferably within ± 3°C and more preferably within ± 2°C, because a separation membrane support having excellent uniformity can be obtained.

As a heating method of the elastic roll, a contact heating method of heating the elastic roll by bringing the elastic roll into contact with the heated metal roll at the time of pressurization, or a non-contact heating method using an infrared heater or the like which can more accurately control the surface temperature of the elastic roll, can be preferably used.

A temperature difference of the elastic roll in a width direction of the nonwoven fabric with respect to the central value is preferably within ± 10°C and more preferably within ± 5°C. In order to more accurately control the temperature difference of the elastic roll in a width direction of the nonwoven fabric, the infrared heater or the like can be installed dividedly in a width direction and output of each heater can be adjusted.

In addition, linear pressure of the flat roll is preferably from 196 N/cm to 4900 N/cm. The linear pressure of the flat roll is preferably equal to or greater than 196 N/cm, more preferably equal to or greater than 490 N/cm, and even more preferably equal to or greater than 980 N/cm, and therefore, it is possible to strongly bond the fibers constituting the nonwoven fabric to each other and set the boiling water curling height of the nonwoven fabric to be equal to or smaller than 8.0 mm. In addition, it is possible to obtain a nonwoven fabric having excellent mechanical strength by realizing high density. Meanwhile, the linear pressure of the flat roll is preferably equal to or smaller than 4900 N/cm, and therefore, it is possible to prevent excessive fusion of the fibers of the surface of the nonwoven fabric, and obtain a separation membrane support having excellent membrane-forming properties, without preventing permeation of the polymer solution into the nonwoven fabric, when the nonwoven fabric is used as the separation membrane support.

The method for manufacturing the nonwoven fabric of the present invention preferably includes integrally forming a nonwoven fabric by performing laminating and thermocompression bonding of a stacked nonwoven fabric layers in a semi-bonded state in which 2 to 5 layers of the nonwoven fabrics in a semi-bonded state are stacked to each other. When the number of laminated layers is two or more, the texture is improved as compared to the texture when using a single layer and sufficient uniformity can be obtained. In addition, when the number of laminated layers is five or less, the wrinkles generated at the time of laminating can be prevented and peeling between the layers can be prevented.

As a method of performing the thermocompression bonding of the spun-bonded nonwoven fabrics, the thermocompression bonding of the nonwoven fabric is not performed with only one pair of flat rolls, and a two-stage bonding method can also be used, in order to more accurately control the characteristics of the nonwoven fabric. That is, a two-stage bonding method of performing preliminary thermocompression bonding of a fiber web between a pair of flat rolls or performing preliminary thermocompression bonding of a fiber web between one flat roll and a collecting conveyer used for collecting the fiber web to obtain a nonwoven fabric in a semi-bonded state (hereinafter, may be referred to as a nonwoven fabric sheet), and then performing the thermocompression bonding of the nonwoven fabric between the flat rolls again in a continuous step or after winding the nonwoven fabric in a semi-bonded state, can be preferably used.

In the preliminary thermocompression bonding in the first stage of the two-stage bonding method, a filling density of the nonwoven fabric in a semi-bonded state (nonwoven fabric sheet) is preferably from 0.1 to 0.3, because higher density of the nonwoven fabric can be achieved at the time of the thermocompression bonding in the second stage. A temperature of the flat rolls used in the preliminary thermocompression bonding at that time is preferably lower than a melting point of the fibers constituting the nonwoven fabric sheet, and a difference between the temperature of the flat rolls used in the preliminary thermocompression bonding and the melting point of the fibers constituting the nonwoven fabric sheet is preferably from 30°C to 130°C, more preferably from 60°C to 120°C, and even more preferably from 100°C to 110°C.

The difference between the temperature of the flat rolls used in the preliminary thermocompression bonding and the melting point of the fibers constituting the nonwoven fabric sheet is preferably equal to or higher than 30°C, and therefore, it is possible to sufficiently increase a movable amorphous content of the polyester fibers constituting the nonwoven fabric sheet before performing the thermocompression bonding. Meanwhile, the difference between the temperature of the flat rolls used in the preliminary thermocompression bonding and the melting point of the fibers constituting the nonwoven fabric sheet is preferably equal to or lower than 130°C, and therefore, it is possible to prevent the fluffiness or the like of the nonwoven fabric sheet in a semi-bonded state and stably wind the nonwoven fabric. The linear pressure of the flat rolls used in the preliminary thermocompression bonding in the first stage is preferably from 49 N/cm to 686 N/cm.

As the method for manufacturing the nonwoven fabric of the present invention, it is preferable that the nonwoven fabric sheet including polyester fibers having the movable amorphous content of 10% to 70% is subjected to the thermocompression bonding using a pair of flat rolls. The movable amorphous content of the polyester fibers constituting the nonwoven fabric sheet before performing the thermocompression bonding using a pair of flat rolls is preferably equal to or greater than 10%, more preferably equal to or greater than 25%, and even more preferably equal to or greater than 40%, and therefore, it is possible to strongly bond the fibers constituting the nonwoven fabric to each other at the time of the thermocompression bonding and set the boiling water curling height of the nonwoven fabric to be equal to or smaller than 8.0 mm, and it is possible to obtain a nonwoven fabric having excellent mechanical strength by realizing high density. Meanwhile, the movable amorphous content of the polyester fibers constituting the nonwoven fabric sheet before performing the thermocompression bonding using a pair of flat rolls is preferably equal to or less than 70%, more preferably equal to or less than 60%, and even more preferably equal to or less than 50%, and therefore, it is possible to prevent generation of wrinkles or the like due to shrinkage of the fibers at the time of the thermocompression bonding and prevent a decrease in strength of the nonwoven fabric due to an excessive decrease in fiber strength.

The separation membrane of the present invention is a separation membrane which is obtained by forming of a membrane having a separation function on a separation membrane support including the nonwoven fabric described above. Examples of such a separation membrane include microfiltration membranes and ultrafiltration membranes used for water treatment performed in a purification plant or manufacturing of industrial use water, and nanofiltration membranes and semipermeable membranes such as reverse osmosis membranes used for treatment of semiconductor manufacturing water, boiler water, medical water and laboratory pure water or seawater desalination treatment.

As a method for manufacturing the separation membrane, a method of forming a membrane having a separation function by performing flow-casting of a polymer solution at least on one surface of the separation membrane support, thereby manufacturing a separation membrane, is preferably used. At that time, it is preferable that a surface of the nonwoven fabric having larger smoothness is set as a membrane-forming surface. In addition, in a case where the separation membrane is a semipermeable membrane, it is preferable that a membrane having a separation function is set as a composite membrane including a support layer and a semipermeable membrane layer and this composite membrane is laminated on at least one surface of the separation membrane support.

The polymer solution to be subjected to the flow-casting on the separation membrane support including the nonwoven fabric of the present invention has a separation function when a membrane is manufactured therefrom, and a solution of polysulfone, polyarylethersulfone such as polyether sulfone, polyimide, polyvinylidene fluoride, cellulose acetate or the like is preferably used, for example. Among these, a solution of polysulfone or polyarylethersulfone is particularly preferably used from viewpoints of chemical, mechanical, and thermal stability. A solvent can be suitably selected according to a membrane-forming material. In addition, a crosslinked polyamide membrane or the like obtained by a polycondensation reaction between a polyfunctional acid halide and a polyfunctional amine is preferably used as a semipermeable membrane in a case of the composite membrane in which the separation membrane includes the separation membrane support layer and the semipermeable membrane layer.

The fluid separation element of the present invention is a fluid separation element in which the separation membrane described above is accommodated in a case, in order to make handling easy when performing incorporation into a seawater desalination apparatus, for example. As a configuration thereof, plate frame type, pleated type, and spiral type fluid separation elements of a flat membrane are exemplified. Among these, a spiral type fluid separation element in which the separation membrane is spirally wound around a water collection tube together with a permeated liquid channel member and a feed liquid channel member is preferably used. The plurality of fluid separation elements can be connected to each other in series or in parallel to be set as a separation membrane unit.

EXAMPLES

[Measuring Method]

(1) Melting Point (°C)

A melting point of a polymer was set as the temperature for applying an extreme value in a melting endothermic curve obtained by performing measurement under a condition of a rate of temperature increase of 20°C/min using a differential scanning type calorimeter DSC-2 type manufactured by PerkinElmer, Inc. In addition, in the differential scanning type calorimeter, a resin not showing an extreme value in the melting endothermic curve was heated on a hot plate and a temperature at which the resin was completely fused by performing microscope observation was set as the melting point.

(2) Intrinsic Viscosity (IV)

Intrinsic viscosity (IV) of the polyethylene terephthalate resin was measured by the following method. 8 g of a sample was dissolved in 100 ml of o-chlorophenol and relative viscosity $\eta_r$ was obtained by the following equation using an Ostwald viscometer at 25°C.

$$\eta_r = \eta/\eta_0 = (t \times d)/(t_0 \times d_0)$$

Herein,

$\eta$: viscosity of the polymer solution;
$\eta_0$: viscosity of o-chlorophenol;
t: dropping time of the solution (seconds);
d: density of the solution (g/cm$^3$);
$t_0$: dropping time of o-chlorophenol (seconds); and

do: density of o-chlorophenol (g/cm³).

Next, the intrinsic viscosity (IV) was calculated from the relative viscosity $\eta_r$ using the following equation.

$$IV = 0.0242 \, \eta_r + 0.2634$$

(3) Movable Amorphous Content of Sheet in Semi-Bonded State (%)

Two samples were arbitrarily collected from the sheet in a semi-bonded state before being integrally formed by the thermocompression bonding, a movable amorphous content was calculated by the following equation under the following conditions using a temperature modulation DSC (Q1000 manufactured by TA Instruments Inc.) and an average value was calculated. An amount of specific heat change in a complete amorphous state was set as 0.4052 J/g°C.

Measurement atmosphere: nitrogen flow (50 ml/min)
Temperature range: 0°C to 300°C
Rate of temperature increase: 2°C/min
Sample amount: 5 mg

$$\text{Movable amorphous content [\%]} = (\text{amount of specific heat change before and}$$

$$\text{after glass transition temperature [J/g°C])/amount of specific heat change in a complete}$$

$$\text{amorphous state [J/g°C]} \times 100$$

(4) Average Single Fiber Diameter (µm)

The average single fiber diameter was obtained by arbitrarily collecting 10 samples of small pieces from the nonwoven fabric, capturing images at a magnification of 500 to 3000 times using a scanning electron microscope, measuring diameters of the total of 100 single fibers which are 10 fibers from each sample, and obtaining an average value thereof by rounding off the first decimal place.

(5) Mass Per Area of Nonwoven Fabric (g/m²)

The mass per area was obtained by collecting 3 nonwoven fabrics having a size of 30 cm $\times$ 50 cm, measuring each mass of each sample, converting an average value of the obtained values to a value per unit area, and rounding off the first decimal place.

(6) Thickness of Nonwoven Fabric (mm)

The thickness was obtained by measuring thicknesses of 10 samples of the nonwoven fabric at equivalent intervals of 1 m in a width direction in a unit of 0.01 mm with a load of 10 kPa using a pressurizer having a diameter of 10 mm based on section 5.1 of JIS L1906 (2000), and rounding off the third decimal place of an average value thereof.

(7) Filling Density of Nonwoven Fabric (-)

The filling density was calculated from the mass per area (g/m²) and the thickness (mm) obtained in Sections (5) and (6) described above and the polymer density, using the following equation, and the second decimal place of the obtained value was rounded off.

$$\text{Filling Density} = \text{mass per area (g/m}^2\text{)/thickness (mm)}/10^3/\text{polymer density}$$

$$(\text{g/cm}^3)$$

The polymer density of the polyethylene terephthalate resin and copolymerized polyethylene terephthalate resin of the example of the present invention was set as 1.38 g/cm$^3$.

(8) Smoothness of Nonwoven Fabric (second)

Smoothness of five places from each of the front surface and the back surface of the nonwoven fabric was measured using a Bekk smoothness testing machine based on JIS P8119 (1998). A value obtained by rounding off the first decimal place of an average value of each five places was set as the smoothness of the front surface and the back surface. Herein, a membrane-forming surface of the nonwoven fabric was set as the front surface and the non-membrane-forming surface thereof was set as the back surface when used as the separation membrane support.

(9) Boiling Water Curling Height of Nonwoven Fabric (mm)

For the boiling water curling height, three samples having a size of lengthwise direction (longitudinal direction of nonwoven fabric) 25 cm x transverse direction (width direction of nonwoven fabric) 25 cm were collected from arbitrary portions of the nonwoven fabric, dipped in boiling water for 5 minutes, and extracted therefrom, and dried naturally on a flat base by setting so that the surface of the nonwoven fabric having larger smoothness faces upward. Heights (distance from the base) of the center portions of both sides regarding the three samples were measured in a unit of 0.5 mm and averaged, and the boiling water curling height was calculated by rounding off the second decimal place thereof.

(10) Tensile Strength of Nonwoven Fabric (N/5 cm)

Regarding the tensile strength, the strength of five places of the nonwoven fabric having a size of 5 cm × 30 cm in each of a lengthwise direction and a transverse direction was measured based on section 6.3.1 of JIS L1913 (2010) under the conditions of a gripping interval of 20 cm and a tension rate of 10 cm/min, the strength at the time of fracture was read, and the values obtained by rounding off the first decimal place thereof were set as the tensile strength in each of the lengthwise direction and the transverse direction.

(11) Cast Liquid Backside-Permeating Property at the Time of Forming Membrane

Regarding a cast liquid backside-permeating property, the back surface of manufactured polysulfone membrane was visually observed, the cast liquid backside-permeating property was evaluated with the following five criteria, and levels with 4 to 5 points were evaluated as acceptable levels.

    5 points: no backside-permeation of cast liquid was observed.
    4 points: slight backside-permeation of cast liquid was observed (surface ratio: less than 5%)
    3 points: backside-permeation of cast liquid was observed (surface ratio: 5% to 50%)
    2 points: backside-permeation of cast liquid was observed in a majority of the part (surface ratio: 51% to 80%)
    1 point: backside-permeation of cast liquid was observed in the most part.

(12) Membrane Bending Property at the Time of Forming Membrane

For the membrane bending property, the states of the separation membrane support and the membrane from unwinding to winding at the time of forming the membrane were visually observed, the membrane bending property was evaluated with the following five criteria, and levels with 3 to 5 points were evaluated as acceptable levels.
5 points: no membrane bending is observed.
4 points: membrane bending which was less than 10% of the entire length was observed, but the bending was restored before performing the winding, and the winding was performed in an unbent state.
3 points: membrane bending which was 10% to 50% of the entire length was observed, but the bending was restored before performing the winding, and the winding was performed in an unbent state.
2 points: membrane bending which was less than 50% of the entire length was observed and the winding was performed in a state that the bent portion was still bent.
1 point: membrane was bent over 50% or more of the entire length and the winding was performed in a bent state.

(13) Separation Membrane Drop Amount ($\mu$m)

[Fluid Separation Element]

A spiral type fluid separation element (element) having an effective membrane area of 40 m$^2$ was manufactured

using a feed liquid channel member formed of a polypropylene-made net, the reverse osmosis membrane for seawater desalination, a pressure-resistant sheet, and the following permeated liquid channel member.

[Permeated Liquid Channel Member]

A polyester-made single tricot (double denbigh stitch) having a groove width of 200 μm, a groove depth of 150 μm, a groove density of 40 grooves/inch, and a thickness of 200 μm was used.

Then, a durability test was performed with respect to the manufactured fluid separation element under conditions of reverse osmosis pressure of 7 MPa, salt concentration in seawater of 3 wt%, and an operating temperature of 40°C, the fluid separation element was disassembled after the operation for 1000 hours, and a drop amount of the separation membrane to the permeated liquid channel member was measured. The drop amounts were measured (unit: μm) by capturing images at a magnification of 500 to 3000 times of three arbitrary separation membrane cross sections of one fluid separation element using a scanning electron microscope, and the drop amounts were obtained by rounding off the first decimal place of an average value thereof. A direction in which the separation membrane support and the permeated liquid channel member were stacked to each other was set as follows. A width direction (transverse direction) of the nonwoven fabric of the separation membrane support was perpendicular to a groove direction of the permeated liquid channel member.

[Example 1]

(Core component)

A material obtained by drying a polyethylene terephthalate resin having intrinsic viscosity (IV) of 0.65, a melting point of 260°C, and a content of titanium oxide of 0.3 mass%, so that a moisture content thereof becomes 10 ppm, was used as a core component.

(Sheath Component)

A material obtained by drying a copolymerized polyethylene terephthalate resin having intrinsic viscosity (IV) of 0.66, an isophthalic acid copolymerization ratio of 11 mol%, a melting point of 230°C, and a content of titanium oxide of 0.2 mass%, so that a moisture content thereof becomes 10 ppm, was used as a sheath component.

(Spinning and Fiber Web Collection)

The core component and the sheath component described above were respectively fused at temperatures of 295°C and 290°C, to form a compound in a concentric core-sheath type (cross section: circular shape) to perform spinning under a condition of a spinneret temperature of 300°C with a mass ratio of the core component and the sheath component of 80/20, followed by spinning at a spinning rate of 4300 m/min by an ejector, and the fibers were collected on a moving net conveyer as a fiber web.

(Preliminary Thermocompression Bonding)

The collected fiber web was subjected to the preliminary thermocompression bonding at the surface temperature of each flat roll of 130°C and linear pressure of 490 N/cm by causing the fiber web to pass between a pair of upper and lower metal flat rolls, whereby a spun-bonded nonwoven fabric (a) in a semi-bonded state having a fiber diameter of 10 μm, a mass per area of 72 g/m$^2$, a thickness of 0.29 mm, and a movable amorphous content of 36% was obtained.

(Thermocompression Bonding)

Using a set of three rolls in which an upper roll is a resin-made elastic roll having hardness (Shore D) of 91, a middle roll is a metal roll, and a lower roll is a resin-made elastic roll having hardness (Shore D) of 75, the obtained spun-bonded nonwoven fabric (a) in a semi-bonded state was subjected to the thermocompression bonding by causing the nonwoven fabric to pass between the middle and lower rolls, the nonwoven fabric was further reflexed and subjected to the thermocompression bonding by causing the nonwoven fabric to pass between the upper and middle rolls, whereby a spun-bonded nonwoven fabric having a mass per area of 72 g/m$^2$, a thickness of 0.08 mm, smoothness of a front surface of 29 seconds, smoothness of a back surface of 11 seconds, and a boiling water curling height of 4.6 mm was manufactured. Regarding the three flat rolls at that time, a surface temperature of the upper roll was 130°C, a surface temperature of the middle roll was 190°C, a surface temperature of the lower roll was 140°C, and the linear pressure was 1862 N/cm.

(Formation of Separation Membrane)

[Polysulfone Membrane]

The obtained spun-bonded nonwoven fabric having a size of width 50 cm × length 10 m was unwound at a speed of 12 m/min, 16 mass% dimethylformamide solution (cast liquid) of polysulfone ("Udel" (registered trademark) -P3500 manufactured by Solvay Advanced Polymers Co., Ltd.) was casted thereon with a thickness of 45 $\mu$m at room temperature (20°C), the resultant material was immediately dipped in pure water at room temperature (20°C) for 10 seconds, dipped in pure water at 75°C for 120 seconds, dipped in pure water at 90°C for 120 seconds, and wound with a strength of 100 N/entire width, thereby manufacturing a polysulfone membrane. At that time, backside permeation of the cast liquid was slightly observed, the bending of the membrane was not observed during unwinding and winding, and the membrane-forming property was excellent. The results are shown in the table.

[Example 2]

A spun-bonded nonwoven fabric (b) in a semi-bonded state having a fiber diameter of 10 $\mu$m, a mass per area of 36 g/m$^2$, a thickness of 0.15 mm, and a movable amorphous content of 38% was obtained in the same manner as in Example 1, except for changing the mass per area and the thickness as shown in the table.

(Laminating and Thermocompression Bonding)

Two sheets of the obtained spun-bonded nonwoven fabric (b) in a semi-bonded state were stacked to each other. Using a set of three rolls in which an upper roll is a resin-made elastic roll having hardness (Shore D) of 91, a middle roll is a metal roll, and a lower roll is a resin-made elastic roll having hardness (Shore D) of 75, the stacked nonwoven fabric was subjected to the thermocompression bonding by causing the nonwoven fabric to pass between the middle and lower rolls, and further reflexed and subjected to the thermocompression bonding by causing the nonwoven fabric to pass between the upper and middle rolls, whereby a spun-bonded nonwoven fabric having a mass per area of 72 g/m$^2$, a thickness of 0.08 mm, smoothness of a front surface of 35 seconds, smoothness of a back surface of 13 seconds, and a boiling water curling height of 3.5 mm was manufactured. Regarding the three flat rolls at that time, a surface temperature of the upper roll was 130°C, a surface temperature of the middle roll was 190°C, a surface temperature of the lower roll was 140°C, and linear pressure was 1862 N/cm.

(Formation of Separation Membrane)

[Polysulfone Membrane]

A polysulfone membrane was manufactured under the same conditions as those in Example 1, using the obtained spun-bonded nonwoven fabric having a size of width 50 cm × length 10 m. At that time, no backside permeation of the cast liquid was observed, the bending of the membrane was not observed during unwinding and winding, and membrane-forming property was excellent. The results are shown in the table.

[Example 3]

A spun-bonded nonwoven fabric (c) in a semi-bonded state having a fiber diameter of 10 $\mu$m, a mass per area of 36 g/m$^2$, a thickness of 0.13 mm, and a movable amorphous content of 32% was obtained in the same manner as in Example 2, except for setting the surface temperature of each flat roll to 140°C.

(Laminating and Thermocompression Bonding)

Two sheets of the obtained spun-bonded nonwoven fabric (c) in a semi-bonded state were stacked to each other, the laminating and thermocompression bonding were performed under the same conditions as those in Example 2, whereby a spun-bonded nonwoven fabric having a mass per area of 72 g/m$^2$, a thickness of 0.09 mm, smoothness of a front surface of 24 seconds, smoothness of a back surface of 8 seconds, and a boiling water curling height of 6.2 mm was manufactured.

(Formation of Separation Membrane)

[Polysulfone Membrane]

A polysulfone membrane was manufactured under the same conditions as those in Example 1, using the obtained spun-bonded nonwoven fabric having a size of width 50 cm × length 10 m. At that time, no backside permeation of the cast liquid was observed, bending of the membrane which was approximately 30% of the entire length was observed while performing dipping in pure water at 90°C but was restored before performing the winding, and membrane-forming property was largely excellent. The results are shown in the table.

[Example 4]

A spun-bonded nonwoven fabric (d) in a semi-bonded state having an average fiber diameter of 10 $\mu$m, a mass per area of 36 g/m$^2$, a thickness of 0.15 mm, and a movable amorphous content of 35% was obtained in the same manner as in Example 2, except for setting the fusion temperature of the core component resin to 290°C, the fusion temperature of the sheath component resin to 270°C, and the fiber spinning rate to 4500 m/min.

(Laminating and Thermocompression Bonding)

Two sheets of the obtained spun-bonded nonwoven fabric (d) in a semi-bonded state were stacked to each other, the laminating and thermocompression bonding were performed under the same conditions as those in Example 2, whereby a spun-bonded nonwoven fabric having a mass per area of 72 g/m$^2$, a thickness of 0.09 mm, smoothness of a front surface of 28 seconds, smoothness of a back surface of 10 seconds, and a boiling water curling height of 4.9 mm was manufactured.

(Formation of Separation Membrane)

[Polysulfone Membrane]

A polysulfone membrane was manufactured under the same conditions as those in Example 1, using the obtained nonwoven fabric having a size of width 50 cm × length 10 m. At that time, no backside permeation of the cast liquid was observed, bending of the membrane which was approximately 5% of the entire length was observed while performing dipping in pure water at 90°C but was restored until the winding was finished, and membrane-manufacturing property was generally excellent. The results are shown in the table.

[Example 5]

A spun-bonded nonwoven fabric having a mass per area of 72 g/m$^2$, a thickness of 0.10 mm, smoothness of a front surface of 21 seconds, smoothness of a back surface of 7 seconds, and a boiling water curling height of 7.7 mm was manufactured in the same manner as in Example 2, except for setting the surface temperature of the upper roll as 120°C, the surface temperature of the middle roll as 180°C, and the surface temperature of the lower roll as 130°C in the three flat rolls at the time of the laminating and thermocompression bonding.

(Formation of Separation Membrane)

[Polysulfone Membrane]

A polysulfone membrane was manufactured under the same conditions as those in Example 1, using the obtained nonwoven fabric having a size of width 50 cm × length 10 m. At that time, no backside permeation of the cast liquid was observed, bending of the membrane which was approximately 40% of the entire length was observed while performing dipping in pure water at 90°C but was restored before performing the winding, and membrane-forming property was generally excellent. The results are shown in the table.

[Example 6]

A spun-bonded nonwoven fabric (e) in a semi-bonded state having a fiber diameter of 10 $\mu$m, a mass per area of 36 g/m$^2$, a thickness of 0.15 mm, and a movable amorphous content of 38% was obtained in the same manner as in Example 2, except for setting the mass ratio of the core component and the sheath component to 85/15.

(Laminating and Thermocompression Bonding)

Two sheets of the obtained spun-bonded nonwoven fabric (e) in a semi-bonded state were stacked to each other, the laminating and thermocompression bonding were performed under the same conditions as those in Example 2, whereby a spun-bonded nonwoven fabric having a mass per area of 72 g/m$^2$, a thickness of 0.08 mm, smoothness of a front surface of 30 seconds, smoothness of a back surface of 12 seconds, and a boiling water curling height of 4.1 mm was manufactured.

(Formation of Separation Membrane)

[Polysulfone Membrane]

A polysulfone membrane was manufactured under the same conditions as those in Example 1, using the obtained nonwoven fabric having a size of width 50 cm $\times$ length 10 m. At that time, no backside permeation of the cast liquid was observed, bending of the membrane which was approximately 5% of the entire length was observed while performing dipping in pure water at 90°C but was restored before performing the winding, and membrane-forming property was generally excellent. The results are shown in the table.

[Example 7]

A spun-bonded nonwoven fabric (f) in a semi-bonded state having a fiber diameter of 10 $\mu$m, a mass per area of 36 g/m$^2$, a thickness of 0.15 mm, and a movable amorphous content of 42% was obtained in the same manner as in Example 4, except for setting the spinneret temperature to 290°C and the spinning rate to 4200 m/min.

(Laminating and Thermocompression Bonding)

Two sheets of the obtained spun-bonded nonwoven fabric (f) in a semi-bonded state were stacked to each other, the laminating and thermocompression bonding were performed under the same conditions as those in Example 2, whereby a spun-bonded nonwoven fabric having a mass per area of 72 g/m$^2$, a thickness of 0.08 mm, smoothness of a front surface of 37 seconds, smoothness of a back surface of 14 seconds, and a boiling water curling height of 2.8 mm was manufactured.

(Formation of Separation Membrane)

[Polysulfone Membrane]

A polysulfone membrane was manufactured under the same conditions as those in Example 1, using the obtained spun-bonded nonwoven fabric having a size of width 50 cm $\times$ length 10 m. At that time, no backside permeation of the cast liquid was observed, the bending of the membrane was not observed during unwinding and winding, and membrane-forming property was excellent. The results are shown in the table.

[Example 8]

A spun-bonded nonwoven fabric (g) in a semi-bonded state having a fiber diameter of 10 $\mu$m, a mass per area of 36 g/m$^2$, a thickness of 0.15 mm, and a movable amorphous content of 46% was obtained in the same manner as in Example 4, except for setting the spinneret temperature to 290°C and the spinning rate to 4100 m/min.

(Laminating and Thermocompression Bonding)

Two sheets of the obtained spun-bonded nonwoven fabric (g) in a semi-bonded state were stacked to each other, the laminating and thermocompression bonding were performed under the same conditions as those in Example 2, whereby a spun-bonded nonwoven fabric having a mass per area of 72 g/m$^2$, a thickness of 0.08 mm, smoothness of a front surface of 40 seconds, smoothness of a back surface of 15 seconds, and a boiling water curling height of 2.1 mm was manufactured.

(Formation of Separation Membrane)

[Polysulfone Membrane]

A polysulfone membrane was manufactured under the same conditions as those in Example 1, using the obtained spun-bonded nonwoven fabric having a size of width 50 cm × length 10 m. At that time, no backside permeation of the cast liquid was observed, the bending of the membrane was not observed during unwinding and winding, and membrane-forming property was excellent. The results are shown in the table.

The characteristics of the obtained nonwoven fabrics are as shown in the table. When a separation membrane was manufactured using each of the nonwoven fabrics of Examples 1 to 8 as a separation membrane support, workability was excellent, and when a fluid separation element was manufactured using each of the obtained separation membranes, workability was excellent. As a result of performing an evaluation of durability of the manufactured fluid separation element, durability was excellent.

[Comparative Example 1]

A spun-bonded nonwoven fabric (f) in a semi-bonded state having a fiber diameter of 10 $\mu$m, a mass per area of 72 g/m$^2$, a thickness of 0.22 mm, and a movable amorphous content of 29% was obtained in the same manner as in Example 1, except for setting the surface temperature of each flat roll to 150°C.

(Thermocompression Bonding)

The obtained spun-bonded nonwoven fabric (f) in a semi-bonded state was subjected to the thermocompression bonding under the same conditions as in Example 1, whereby a spun-bonded nonwoven fabric having a mass per area of 72 g/m$^2$, a thickness of 0.10 mm, smoothness of a front surface of 17 seconds, smoothness of a back surface of 6 seconds, and a boiling water curling height of 8.3 mm was manufactured.

(Formation of Separation Membrane)

[Polysulfone Membrane]

A polysulfone membrane was manufactured under the same conditions as those in Example 1, using the obtained nonwoven fabric having a size of width 50 cm × length 10 m. At that time, backside permeation of the cast liquid was slightly observed, bending of the membrane which was approximately 70% of the entire length was observed while performing dipping in pure water at 90°C, the winding thereof was performed in a bent state, and membrane-forming property was not good. The results are shown in the table.

[Comparative Example 2]

A polyethylene terephthalate resin having intrinsic viscosity (IV) of 0.65, a melting point of 260°C, and a content of titanium oxide of 0.3 mass% was dried so that a moisture content thereof becomes 10 ppm, fused at 295°C, to perform spinning from fine holes having a cross section of circular shape at a spinneret temperature of 300°C, followed by spinning at a spinning rate of 4300 m/min by an ejector, and the fibers were collected on a moving net conveyer as a fiber web.

(Preliminary Thermocompression Bonding)

The collected fiber web was subjected to the preliminary thermocompression bonding at the surface temperature of each flat roll of 170°C and linear pressure of 490 N/cm by causing the fiber web to pass between a pair of upper and lower metal flat rolls, whereby a spun-bonded nonwoven fabric (g) in a semi-bonded state having a fiber diameter of 10 $\mu$m, a mass per area of 36 g/m$^2$, a thickness of 0.16 mm, and a movable amorphous content of 36% was obtained.

(Laminating and Thermocompression Bonding)

Two sheets of the obtained spun-bonded nonwoven fabric (g) in a semi-bonded state were stacked to each other. Using a set of three rolls in which an upper roll is a resin-made elastic roll having hardness (Shore D) of 91, a middle roll is a metal roll, and a lower roll is a resin-made elastic roll having hardness (Shore D) of 75, the stacked nonwoven fabric was subjected to the thermocompression bonding by causing the nonwoven fabric to pass between the middle and lower rolls, and further reflexed and subjected to the thermocompression bonding by causing the nonwoven fabric to pass between the upper and middle rolls, whereby a spun-bonded nonwoven fabric having a mass per area of 72 g/m$^2$, a thickness of 0.12 mm, smoothness of a front surface of 12 seconds, smoothness of a back surface of 3 seconds, and a boiling water curling height of 10.4 mm was manufactured. Regarding the three flat rolls at that time, a surface temperature of the upper roll was 130°C, a surface temperature of the middle roll was 200°C, a surface temperature of the lower roll was 140°C, and linear pressure was 1862 N/cm.

(Formation of Separation Membrane)

[Polysulfone Membrane]

A polysulfone membrane was manufactured under the same conditions as those in Example 1, using the obtained nonwoven fabric having a size of width 50 cm × length 10 m. At that time, backside permeation of the cast liquid was slightly observed, bending of the membrane was observed almost over the entire length while performing dipping in pure water at 90°C, the winding thereof was performed in a bent state, and membrane-forming property was not good. The results are shown in the table.

[Comparative Example 3]

(Laminating and Thermocompression Bonding)

Two sheets of the spun-bonded nonwoven fabric (b) obtained in the same manner as in Example 2 were stacked to each other and subjected to thermocompression bonding by causing the stacked sheets to pass between a pair of upper and lower metal flat rolls, whereby a spun-bonded nonwoven fabric having a mass per area of 72 g/m$^2$, a thickness of 0.08 mm, smoothness of a front surface of 42 seconds, smoothness of a back surface of 40 seconds, and a boiling water curling height of 2.9 mm was manufactured. The surface temperatures of the upper and lower metal flat rolls at that time were 180°C and linear pressure was 686 N/cm.

(Formation of Separation Membrane)

[Polysulfone Membrane]

A polysulfone membrane was manufactured under the same conditions as those in Example 1, using the obtained nonwoven fabric having a size of width 50 cm × length 10 m. At that time, no bending was observed during unwinding and winding, but the backside permeation of the cast liquid was observed in the most part, and membrane-forming property was not good. The results are shown in the table.

The characteristics of the obtained nonwoven fabrics are as shown in the table. When a separation membrane was manufactured using each of the nonwoven fabrics of Comparative Examples 1 to 3 as a separation membrane support, workability was not good. When a fluid separation element was manufactured using each of the obtained separation membranes, bending or rolling of the membrane was observed at the time of the manufacturing in the cases of Comparative Examples 1 and 2, and workability was not good. The friction of resins permeated to the backside when laminating the membranes was large in the case of Comparative Example 3 and workability was not good.

Table 1

| | | | Ex.1 | Ex.2 | Ex.3 | Ex.4 | Ex.5 | Ex.6 | Ex.7 | Ex.8 | Comp. Ex.1 | Comp. Ex.2 | Comp. Ex.3 |
|---|---|---|---|---|---|---|---|---|---|---|---|---|---|
| First layer | Type of nonwoven fabric | | SB | SB | SB | SB | SB | SB | SB | SB | SB | SB | SB |
| | Fiber composition — Core component | Type of resin | PET | PET | PET | PET | PET | PET | PET | PET | PET | PET | PET |
| | | Melting point (°C) | 260 | 260 | 260 | 260 | 260 | 260 | 260 | 260 | 260 | 260 | 260 |
| | Fiber composition — Sheath component | Type of resin | co-PET | co-PET | co-PET | co-PET | co-PET | co-PET | co-PET | co-PET | co-PET | | co-PET |
| | | Melting point (°C) | 230 | 230 | 230 | 230 | 230 | 230 | 230 | 230 | 230 | | 230 |
| | Sheath component ratio (mass%) | | 20 | 20 | 20 | 20 | 20 | 15 | 20 | 20 | 20 | 0 | 20 |
| | Spinning rate (m/min) | | 4300 | 4300 | 4300 | 4500 | 4300 | 4300 | 4200 | 4100 | 4300 | 4300 | 4300 |
| | Preliminary thermocompression bonding conditions — Temperature (°C) | Upper | 130 | 130 | 140 | 130 | 130 | 130 | 130 | 130 | 150 | 170 | 130 |
| | | Lower | 130 | 130 | 140 | 130 | 130 | 130 | 130 | 130 | 150 | 170 | 130 |
| | Linear pressure (N/cm) | | 490 | 490 | 490 | 490 | 490 | 490 | 490 | 490 | 588 | 490 | 490 |
| | Fiber diameter (μm) | | 10 | 10 | 10 | 10 | 10 | 10 | 10 | 10 | 10 | 10 | 10 |
| | Mass per area (g/m²) | | 72 | 36 | 36 | 36 | 36 | 36 | 36 | 36 | 72 | 36 | 36 |
| | Movable amorphous content (%) | | 36 | 38 | 32 | 35 | 38 | 38 | 42 | 46 | 29 | 36 | 38 |

| | | | | Ex.1 | Ex.2 | Ex. 3 | Ex.4 | Ex. 5 | Ex.6 | Ex.7 | Ex. 8 | Comp. Ex.1 | Comp. Ex.2 | Comp. Ex. 3 |
|---|---|---|---|---|---|---|---|---|---|---|---|---|---|---|
| Second layer | Type of nonwoven fabric | | | | SB | SB | SB | SB | SB | SB | SB | | SB | SB |
| | Fiber composition | Core component | Type of resin | | PET | PET | PET | PET | PET | PET | PET | | PET | PET |
| | | | Melting point (°C) | | 260 | 260 | 260 | 260 | 260 | 260 | 260 | | 260 | 260 |
| | | Sheath component | Type of resin | | co-PET | co-PET | co-PET | co-PET | co-PET | co-PET | co-PET | | | co-PET |
| | | | Melting point (°C) | | 230 | 230 | 230 | 230 | 230 | 230 | 230 | | | 230 |
| | | Sheath component ratio (mass%) | | | 20 | 20 | 20 | 20 | 20 | 20 | 20 | | 0 | 20 |
| | Spinning rate (m/min) | | | | 4300 | 4300 | 4500 | 4300 | 4300 | 4200 | 4100 | | 4300 | 4300 |
| | Preliminary thermocompression bonding conditions | Temperature (°C) | Upper | | 130 | 140 | 130 | 130 | 130 | 130 | 130 | | 170 | 130 |
| | | | Lower | | 130 | 140 | 130 | 130 | 130 | 130 | 130 | | 170 | 130 |
| | | Linear pressure (N/cm) | | | 490 | 490 | 490 | 490 | 490 | 490 | 490 | | 490 | 490 |
| | Fiber diameter ($\mu$m) | | | | 10 | 10 | 10 | 10 | 10 | 10 | 10 | | 10 | 10 |
| | Mass per area (g/m$^2$) | | | | 36 | 36 | 36 | 36 | 36 | 36 | 36 | | 36 | 36 |
| | Movable amorphous content (%) | | | | 38 | 32 | 35 | 38 | 38 | 42 | 46 | | | 38 |

Table 2

| | | | | Ex. 1 | Ex.2 | Ex. 3 | Ex.4 | Ex. 5 | Ex.6 | Ex. 7 | Ex. 8 | Comp. Ex.1 | Comp. Ex. 2 | Comp. Ex. 3 |
|---|---|---|---|---|---|---|---|---|---|---|---|---|---|---|
| Nonwoven fabric | | Number of lamination | | 1 | 2 | 2 | 2 | 2 | 2 | 2 | 2 | 1 | 2 | 2 |
| | Thermocompression bonding conditions | Flat roll | Number/set | 3 | 3 | 3 | 3 | 3 | 3 | 3 | 3 | 3 | 3 | 2 |
| | | | Number of set | 1 | 1 | 1 | 1 | 1 | 1 | 1 | 1 | 1 | 1 | 1 |
| | | Type of roll | Upper | Elastic | Elastic | Elastic | Elastic | Elastic | Elastic | Elastic | Elastic | Elastic | Elastic | Metal |
| | | | Middle | Metal | Metal | Metal | Metal | Metal | Metal | Metal | Metal | Metal | Metal | |
| | | | Lower | Elastic | Elastic | Elastic | Elastic | Elastic | Elastic | Elastic | Elastic | Elastic | Elastic | Metal |
| | | Elastic roll hardness (Shore D) | Upper | 91 | 91 | 91 | 91 | 91 | 91 | 91 | 91 | 91 | 91 | - |
| | | | Lower | 75 | 75 | 75 | 75 | 75 | 75 | 75 | 75 | 75 | 75 | - |
| | | Roll temperature (°C) | Upper | 130±5 | 130±5 | 130±5 | 130±5 | 120±5 | 130±5 | 130±5 | 130±5 | 130±5 | 130±5 | 180±5 |
| | | | Middle | 190±2 | 190±2 | 190±2 | 190±2 | 180±2 | 190±2 | 190±2 | 190±2 | 190±2 | 200±2 | |
| | | | Lower | 140±5 | 140+5 | 140±5 | 140±5 | 130±5 | 140±5 | 140±5 | 140±5 | 140±5 | 140±5 | 180±5 |
| | | Linear pressure (N/cm) | | 1862 | 1862 | 1862 | 1862 | 1862 | 1862 | 1862 | 1862 | 1862 | 1862 | 686 |
| | Mass per area (g/m$^2$) | | | 72 | 72 | 72 | 72 | 72 | 72 | 72 | 72 | 72 | 72 | 72 |
| | Thickness (mm) | | | 0.08 | 0.08 | 0.09 | 0.09 | 0.10 | 0.08 | 0.08 | 0.08 | 0.10 | 0.12 | 0.08 |
| | Smoothness (second) | Front surface | | 29 | 35 | 24 | 28 | 21 | 30 | 37 | 40 | 17 | 12 | 42 |
| | | Back surface | | 11 | 13 | 8 | 10 | 7 | 12 | 14 | 15 | 6 | 3 | 40 |
| | Boiling water curling height (mm) | | | 4.6 | 3.5 | 6.2 | 4.9 | 7.7 | 4.1 | 2.8 | 2.1 | 8.3 | 10.4 | 2.9 |
| | Tensile strength (N/5 cm) | Lengthwise | | 413 | 425 | 408 | 415 | 401 | 393 | 430 | 438 | 391 | 395 | 430 |
| | | Transverse | | 212 | 217 | 205 | 209 | 198 | 190 | 224 | 230 | 187 | 131 | 221 |

(continued)

| | | | Ex. 1 | Ex.2 | Ex. 3 | Ex.4 | Ex. 5 | Ex.6 | Ex. 7 | Ex. 8 | Comp. Ex. 1 | Comp. Ex. 2 | Comp. Ex.3 |
|---|---|---|---|---|---|---|---|---|---|---|---|---|---|
| Separation membrane and Fluid separation element | Membrane-forming workability | Cast liquid backside-permeating property | 4 | 5 | 5 | 5 | 5 | 5 | 5 | 5 | 4 | 4 | 2 |
| | | Membrane bending property | 5 | 5 | 3 | 4 | 3 | 4 | 5 | 5 | 1 | 1 | 5 |
| | Fluid separation element workability | | Excellent | Excellent | Excellent | Excellent | Excellent | Excellent | Excellent | Excellent | Not good | Not good | Not good |
| | Drop amount of membrane ($\mu$m) | | 27 | 26 | 29 | 28 | 31 | 33 | 25 | 24 | 35 | 42 | 26 |

Abbreviations in the tables are as follows.

PET: polyethylene terephthalate
co-PET: copolymerized polyethylene terephthalate

## Claims

1. A nonwoven fabric, which has two surfaces having a difference in smoothness there between of 10 seconds to 50 seconds which is measured based on JIS P8119, and has a boiling water curling height after treating in boiling water for 5 minutes of from 0 mm to 8.0 mm which is acquired by extracting three samples having a size of 25 cm square from arbitrary portions of the nonwoven fabric, dipping the samples in boiling water for 5 minutes and then taking out the samples therefrom, drying the samples naturally on a flat base by disposing the samples so that the surface thereof having larger smoothness faces upward, measuring a height (distance from the base) of the center portion of both sides of the three samples in a unit of 0.5 mm, and averaging the values,
wherein the nonwoven fabric is a spun-bonded nonwoven fabric, and
wherein the nonwoven fabric comprises conjugate fibers comprising a high-melting-point polymer and a low-melting-point polymer which is disposed around the high-melting-point polymer and has a melting point lower than a melting point of the high-melting-point polymer,
a difference between the melting point of the high-melting-point polymer and the melting point of the low-melting-point polymer is from 10°C to 140°C, and
the conjugate fibers contain 50 mass% to 90 mass% of the high-melting-point polymer.

2. A separation membrane support comprising the nonwoven fabric according to claim 1.

3. A separation membrane obtained by forming a membrane having a separation function on a surface of the separation membrane support according to claim 2.

4. A fluid separation element comprising the separation membrane according to claim 3 as a constituent element.

5. A method for manufacturing the nonwoven fabric according to claim 1, the method comprising:
performing thermocompression bonding of a nonwoven fabric sheet comprising polyester fibers having a movable amorphous content of 40% to 70% with a pair of flat rolls.

6. A method for manufacturing the nonwoven fabric according to claim 5, wherein the nonwoven fabric sheet is subjected to preliminary thermocompression bonding with flat rolls and has a filling density of 0.1 to 0.3,
a temperature of the flat rolls used in the preliminary thermocompression bonding is lower than a melting point of fibers constituting the nonwoven fabric sheet, and
a difference between the temperature of the flat rolls in the preliminary thermocompression bonding and the melting point of the fibers constituting the nonwoven fabric sheet is from 30°C to 130°C.

## Patentansprüche

1. Vliesstoff, der zwei Oberflächen mit einem Unterschied der Glätte dazwischen von 10 Sekunden bis 50 Sekunden aufweist, die basierend auf JIS P8119 gemessen wurde, und der eine Siedewasserrollhöhe nach 5-minütiger Behandlung in siedendem Wasser von 0 mm bis 8,0 mm aufweist, die durch Extrahieren von drei Proben mit einer Größe von 25 cm$^2$ aus beliebigen Abschnitten des Vliesstoffs, Eintauchen der Proben in kochendes Wasser für 5 Minuten und anschließendem Entnehmen der Proben daraus, natürliches Trocknen der Proben auf einer ebenen Basis durch Anordnen der Proben, so dass ihre Oberfläche mit größerer Glätte nach oben zeigt, Messen einer Höhe (Abstand von der Basis) des mittleren Abschnitts beider Seiten der drei Proben in einer Einheit von 0,5 mm und Mittelung der Werte gewonnen wurde,
wobei der Vliesstoff ein Spinnvliesstoff ist, und
wobei der Vliesstoff konjugierte Fasern umfasst, die ein hochschmelzendes Polymer und ein niedrigschmelzendes Polymer umfassen, das um das hochschmelzende Polymer herum angeordnet ist und einen Schmelzpunkt aufweist, der niedriger ist als ein Schmelzpunkt des hochschmelzenden Polymers,
wobei eine Differenz zwischen dem Schmelzpunkt des hochschmelzenden Polymers und dem Schmelzpunkt des niedrigschmelzenden Polymers 10°C bis 140°C beträgt, und

die konjugierten Fasern 50 Massen-% bis 90 Massen-% des hochschmelzenden Polymers enthalten.

**2.** Trennmembranträger, umfassend das Vlies nach Anspruch 1.

**3.** Trennmembran, erhalten durch Bilden einer Membran mit einer Trennfunktion auf einer Oberfläche des Trennmembranträgers nach Anspruch 2.

**4.** Fluidtrennungselement, umfassend die Trennmembran nach Anspruch 3 als Bestandteil.

**5.** Verfahren zur Herstellung des Vliesstoffs nach Anspruch 1, wobei das Verfahren umfasst:
Durchführen einer Thermokompressionsverbindung einer Vliesstoffbahn, die Polyesterfasern mit einem beweglichen amorphen Anteil von 40% bis 70% umfasst, mit einem Paar Flachrollen.

**6.** Verfahren zur Herstellung des Vliesstoffs nach Anspruch 5, wobei die Vliesstoffbahn einer vorläufigen Thermokompressionsverbindung mit Flachwalzen unterworfen wird und eine Fülldichte von 0,1 bis 0,3 aufweist,
wobei eine Temperatur der Flachwalzen, die für die vorläufige Thermokompression verwendet werden, niedriger ist als ein Schmelzpunkt von Fasern, die die Vliesstoffbahn bilden, und
eine Differenz zwischen der Temperatur der Flachwalzen in der vorläufigen Thermokompression und dem Schmelzpunkt der Fasern, die die Vliesstoffbahn bilden, zwischen 30°C und 130°C liegt.

**Revendications**

**1.** Non-tissé, qui a deux surfaces présentant une différence de lissé mesurée selon JIS P8119 entre 10 et 50 secondes, et une hauteur de frisure à l'eau bouillante après traitement dans l'eau bouillante pendant 5 minutes, de 0 à 8,0 mm qui est acquise par extraction de trois échantillons de taille de 25 cm carré provenant de parties arbitraires du non-tissé, immersion des échantillons dans l'eau bouillante pendant 5 minutes, puis retrait des échantillons de l'eau bouillante, séchage naturel des échantillons à plat de façon que la surface ayant un lissé plus important soit orientée vers le haut, mesure d'une hauteur (distance par rapport à la base) de la partie centrale des deux côtés des trois échantillons en unité de 0,5 mm, et établissement de la moyenne des valeurs,
dans lequel le non-tissé est un non-tissé de type filé-lié, et
dans lequel le non-tissé comprend des fibres conjuguées à base d'un polymère à point de fusion élevé et d'un polymère à bas point de fusion qui est agencé autour du polymère à point de fusion élevé et a un point de fusion inférieur à un point de fusion du polymère à point de fusion élevé,
une différence entre le point du fusion du polymère à point de fusion élevé et le point de fusion du polymère à bas point de fusion est de 10°C à 140 °C, et
les fibres conjuguées contiennent de 50 à 90 % en masse du polymère à point de fusion élevé.

**2.** Support de membrane de séparation comprenant le non-tissé selon la revendication 1.

**3.** Membrane de séparation obtenue par formation d'une membrane ayant une fonction de séparation sur une surface du support de membrane de séparation selon la revendication 2.

**4.** Elément de séparation de fluide comprenant la membrane de séparation selon la revendication 3 à titre d'élément constitutif.

**5.** Procédé de fabrication du non-tissé selon la revendication 1, le procédé comprenant :
la réalisation d'une liaison par thermocompression d'une feuille de non-tissé comprenant des fibres polyesters ayant une teneur amorphe variable de 40% à 70 % à l'aide d'une paire de rouleaux plats.

**6.** Procédé de fabrication du non-tissé selon la revendication 5, dans lequel la feuille de non-tissé est soumise à une liaison par thermocompression préliminaire à l'aide de rouleaux plats et a une densité de remplissage de 0,1 à 0,3,
une température des rouleaux plats utilisés dans la liaison par thermocompression préliminaire est inférieure à un point de fusion des fibres constituant la feuille de non-tissé, et
une différence entre la température des rouleaux plats dans la liaison par thermocompression préliminaire et le point de fusion des fibres constituant la feuille de non-tissé est de 30°C à 130 °C.

**EP 3 051 014 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013125583 A1
- JP 2013071106 A
- JP 2012045509 A
- JP 4021526 B
- JP 2002095937 A
- JP 2011161344 A